# FASCICULE DE BREVET EUROPEEN

(11) **EP 0 351 292 B1**
(45) Date de publication et mention de la délivrance du brevet: **07.12.1994**
(21) Numéro de dépôt: 89401944.7
(22) Date de dépôt: 06.07.1989
(51) Int. Cl.: G01N 27/416

(54) **Procédé ampérométrique pour mesurer l'acidité**
Amperometrisches Verfahren zur Messung des Säuregrades
Amperometric method for measuring acidity

(30) Priorité: 06.07.1988 FR 8809161
(43) Date de publication de la demande: 17.01.1990
(73) Titulaire: ELECTRICITE DE FRANCE Service National, 75008 Paris (FR)
(72) Inventeur: Bessière, Jacques, Velaine en Haye F-54840 Gondizeville (FR); Perdicakis, Michel, F-54000 Nancy (FR)
(74) Mandataire: Martin, Jean-Jacques

(56) Documents cités:
- WO-A-88/00342
- DE-A- 2 013 378
- US-A- 3 436 329
- US-A- 3 647 641
- J. ELECTROANAL. CHEM. vol. 246, no. 2, 30 June 1988, LAUSANNE CH. pages 297 - 305; J. WANG ET AL: "ANODIC STRIPPING VOLTAMMETRY AT ULTRAMICROELECTRODES FOR METAL SPECIATION STUDIES IN AQUEOUS SOLUTIONS OF LOW IONIC STRENGTH"
- J. ELECTROANAL. CHEM. vol. 185, 31 December 1985, LAUSANNE CH. pages 197 -202; D.R. MACFARLANE ET AL: 'THIN-RING ULTRA-MICROELECTRODE'

## Description

La présente invention concerne un procédé ampérométrique pour mesurer la concentration d'espèce dissoute.

Elle a plus particulièrement pour objet une technique de mesure d'acidité dans un milieu très peu conducteur de l'électricité.

A titre indicatif, par très peu conducteur, on entend un milieu dont la conductivité est inférieure à environ 10⁻⁴, en général à 10⁻⁵ ohm⁻¹, cm⁻¹.

De nombreux fluides organiques sont utilisés dans les divers domaines de l'activité industrielle. La dégradation de ces fluides organiques conduit très souvent à des composés acides, que cette dégradation soit le résultat d'une oxydation, d'une thermolyse ou d'une hydrolyse.

Plus particulièrement, les esters d'acides minéraux ou d'acides organiques et plus particulièrement les esters d'acides phosphoriques ont pris un développement important comme constituant ou composant d'huile lubrifiante synthétique, de fluide échangeur de chaleur ou comme élément d'addition dans des fluides d'actionnement.

Ces esters lors de leur dégradation, conduisent souvent à des acides par exemple par hydrolyse, par coupure thermolytique ou oxydante. Ils peuvent également donner des acides par oxydation de l'alcool en aldéhyde puis en acide.

L'acidité dégagée est extrêmement néfaste, modifie les propriétés lubrifiantes et risque d'attaquer les parties métalliques avec lesquelles le fluide est mis en contact. Ceci présente le double désavantage de modifier sensiblement la composition du fluide et d'autre part, de réduire la résistance des contenants dans lesquels se trouvent lesdits fluides.

Il est donc important de suivre de près le taux d'acidité dans ces fluides, afin de prendre toutes les mesures qui s'avèreraient nécessaires, telles que par exemple remettre un agent d'estérification, éliminer l'acide par passage sur un lit d'absorbant d'acide (support basique, résine, ...) ou remplacer le fluide.

Une des techniques les plus employées pour ce faire est bien entendu le prélèvement d'échantillon et un dosage acidimétrique dudit fluide. Toutefois, cette technique n'est pas toujours utilisable, d'une part parce que le temps de réponse peut être trop long et, d'autre part parce que la prise d'échantillon peut être difficile, dangereuse, onéreuse, voire impossible; c'est notamment le cas des fluides de ce type utilisés dans les parties chaudes de l'industrie nucléaire.

Pour résoudre ce problème, et puisque la mesure du pH est quasiment impossible par les techniques ordinaires dans des milieux non conducteurs, on s'est dirigé vers des techniques de mesure indirecte, voire très frustes.

Ces techniques font pour l'essentiel appel au pouvoir corrodant du milieu, que ce soit en mesurant la différence de potentiel entre deux électrodes de métaux différents, que ce soit l'utilisation de fusible, la rupture du fusible signifiant que le taux d'acidité et de dégradation du fluide a atteint un niveau critique.

Un autre dispositif de ce type est décrit dans la demande de brevet français publiée sous le n° 2 527 775. Ce dispositif est une sonde corrodable, dans lequel on peut faire passer un courant électrique continu ou alternatif, la mesure de la résistance ou de l'impédance de la sonde corrodée constitue la mesure indirecte de l'acidité du milieu.

En réalité, cette mesure indirecte reste très approximative car elle ne peut rendre compte d'effets cinétiques qui ne sont pas toujours en relation directe avec la concentration en acide. Il convient ici de souligner que chaque fois que l'acidité atteint un niveau critique, il convient de faire intervenir un opérateur pour changer le système de mesure ou de sonde. Les fusibles et les sondes étant dans tous les cas des fusibles et des sondes consommables. L'homme de métier se rend bien compte de l'inconvénient de telles techniques dans les zone chaudes de l'industrie nucléaire.

C'est pourquoi, un des buts de la présente invention est de fournir un procédé de mesure de la dégradation des fluides du type exposé ci-dessus qui soit directe.

Un autre but de la présente invention est de fournir un procédé du type ci-dessus qui mesure l'acidité dégagée par la dégradation des fluides du type ci-dessus.

Un autre but de la présente invention est de fournir un procédé qui ne nécessite pas d'interventions fréquentes sur le lieu de mesure.

Un autre but de la présente invention est de fournir un procédé du type ci-dessus qui ne nécessite pas la modification des fluides à l'occasion de ou par ajouts de réactifs de titrage.

Un autre but de la présente invention est de fournir un dispositif qui soit susceptible de mettre en oeuvre un procédé du type ci-dessus.

Ces buts et d'autres qui apparaîtront par la suite sont atteints au moyen d'un procédé ampérométrique pour mesurer l'acidité dans un milieu très peu conducteur, caractérisé par le fait qu'on utilise un montage comportant une ultra-microélectrode de mesure et une contre-électrode. Par ultra-microélectrode, il faut entendre une microélectrode dont la surface est au plus égale à 8000 micromètres carrés.

Une des limitations majeures des techniques utilisées jusqu'à présent et faisant appel à des mesures potentiomètriques ou voltampérométriques est la nécessité de l'emploi d'une électrode de référence. Une telle électrode est fragile et n'a pas de durée de vie compatible avec l'emploi dans des zones chaudes. Par ailleurs, elle risque de poluer, par exemple par diffusion, le milieu dont on désire mesurer l'acidité. Cette polution s'accroît au cours de temps ; non négligeable au bout d'une semaine, elle devient significative au bout d'un mois et importante au bout de un à plusieurs trimestres. Ce problème de pollution n'est pas uniquement lié à l'emploi de fluides fonctionnant dans les zones chaudes, il est lié à toutes les mesures d'un milieu qui ne peut être pollué par des réactifs liés à l'emploi de la mesure. En outre, cette pollution est corrélée avec une perte d'efficacité d'électrode de référence, qu'il convient alors de changer assez vite, ce qui est contraire avec un des buts de l'invention.

Une autre des limitations majeures des techniques ampérométriques est que jusqu'à présent elles exigeaient la présence d'un électrolyte indifférent surtout lorsque le milieu dans lequel est effectué la mesure est un milieu peu conducteur de l'électricité.

Certes, des articles tels que ceux publiés dans J. Electroanal. Chem. 168(1984) 299-312 et J. Electroanal. Chem. 220 (1987) 31 40, respectivement sous les titres "Electrochemistry in Organic Solvents without Supporting Electrolyte Using Platinum Microelectrodes" et "Voltammetric Measurements with Microelectrodes in Low-Conductrivity systems" montrent la possibilité d'effectuer des études mécanistiques électrochimiques en l'absence d'électrolyte indifférent lorsqu'il s'agit de molécules neutres (ferrocène) et dès lors qu'on utilise une ultra-microélectrode en combinaison avec une électrode de référence et une contre-électrode.

En outre, un problème spécifique aux esters oxygénés et plus particulièrement aux esters phosphorés est que toute mesure de type ampérométrique ou polarographique était réputée impossible par les spécialistes en la matière (cf. l'ouvrage de référence de V. Gutmann, Coordination Chemistry in Non-Aqueous Solutions édité par Springer-Verlag Wien, New York 1968, page 151), et ce, même en présence d'un électrolyte indifférent.

Ainsi, au cours des études qui ont mené à la présente invention, il a été montré que pour une différence de potentiel donnée entre ultra-microélectrode et contre-électrode, et non entre ultra-microélectrode et électrode de référence, il y avait une corrélation simple et reproductible entre l'intensité débitée entre la contre-électrode et l'ultra-microélectrode d'une part, et l'acidité du milieu d'autre part, et qu'il était ainsi possible de mesurer cette acidité par ampérométrie.

La surface de l'ultra-microélectrode qui est conditionnée par le diamètre du fil à partir duquel elle est fabriquée et qui correspond sensiblement à la surface de sa section droite joue un rôle très important dans la mesure.

Selon la présente invention, la surface doit être d'autant plus faible que la constante diélectrique du milieu dans lequel l'acidité est à mesurer est plus faible. Ainsi, s'il est possible de réaliser des mesures avec une ultra-microélectrode de 100 µm de diamètre pour des constantes diélectriques de l'ordre de 80, il convient de descendre à des valeurs aux alentours de 50 µm pour des constantes diélectriques en dessous de 40, des diamètres correspondant à 10 µm permettent de descendre à des constantes diélectriques de l'ordre de 5. Avantageusement, elle ne doit pas être supérieure à 50 µm pour des constantes diélectriques supérieures à 30, à 10 µm pour des constantes diélectriques comprises entre 10 et 15 et de l'ordre de 1 µm pour des constantes de diélectriques comprises entre 5 et 10. Toutefois, il est possible de réaliser des mesures moins précises avec une électrode de 1 µm lorsque la constante diélectrique est inférieure à 5 (les zéros indiqués ci-dessus ne sont pas des chiffres significatifs).

Pour une meilleure mesure, il est préférable d'avoir des ultra-microélectrodes dont le diamètre est aussi faible que possible. Seules les techniques de fabrication constituent un facteur limitant, ainsi que les mesures de détection du courant qui doivent être alors d'une sensibilité supérieure au nanoampère. Ainsi, il y a un compromis à trouver entre la sensibilité des appareils mesurant l'intensité passant entre les deux électrodes qui est limitée, et d'autre part, la section des fils servant à la fabrication des ultra-microélectrodes.

Ces ultra-microélectrodes sont en général réalisées à partir d'un fil de forme sensiblement cylindrique, noyé dans une gaine en général de verre, et dont l'extrémité est polie de façon à ce que la section du fil de métal constitue la microélectrode. Ainsi, l'ultra-microélectrode est composée d'une surface sensiblement en forme de disque dont le diamètre est très faible.

Le choix de la différence de potentiel imposée entre ultra-microélectrode et contre-électrode dépend de la taille et de la nature de l'ultra-microélectrode, et de la nature de la contre-électrode.

La différence de potentiel imposée est de préférence choisie de telle manière que le potentiel pris par l'ultra-microélectrode se situe dans la zone de potentiel correspondant au courant limite de diffusion de l'espèce chimique dont on désire mesurer la concentration. S'il n'est pas possible d'atteindre ce courant limite de diffusion, il convient selon la présente invention de réduire la surface de l'ultra-microélectrode.

Cette technique convient bien pour mesurer une acidité dont la limite supérieure est 10⁻¹ N avantageusement 10⁻² N et la limite inférieure 10⁻⁵ avantageusement 10⁻⁴ et de préférence 10⁻³ N ; les limites inférieures sont d'ailleurs des limitations qui ne sont pas liées aux facteurs électrochimiques selon la présente invention, mais sont liées aux appareillages devant imposer le potentiel entre les deux électrodes et mesurer l'intensité passant dans la cellule.

A titre indicatif, pour une mesure de l'acidité avec une contre-électrode en zinc dans un ester phosphorique, un potentiel de l'ordre de 1 volt convient parfaitement.

A titre indicatif, la mesure d'acidité peut être déterminée pour tous les acides dont les valeurs des pKₐ sont au plus égales à 11, de préférence à 7. Ces valeurs ne sont que grossières puisque ces valeurs sont des valeurs données pour une acidité mesurée dans l'eau et que les acidités réelles varient suivant le milieu.

Au cours de l'étude qui a conduit à la présente invention, il a été démontré que, pour éviter les phénomènes parasites issus de contre-électrode, il était préférable que celle-ci ait une surface bien supérieure à celle de l'ultra-microélectrode.

Le rapport des surfaces de ces deux électrodes est de préférence au moins égal à 10 avantageusement à 100 (un chiffre significatif). Dans les cas difficiles, lorsqu'un rapport de 10 sera révélé insuffisant, l'homme de métier fera croître ce rapport jusqu'au moment où une augmentation ultérieure du rapport ne change plus les résultats. Comme il n'existe pas en fait de limite supérieure significative de ce rapport et que ce rapport dépend du milieu et de la nature de la contre-électrode et des espèces en solution, en général on utilise par sécurité des rapports bien supérieurs à celui de 10 et l'on peut indiquer comme satisfaisant des rapports supérieurs à 1000 (voire 10 000). Lorsqu'un tel système est installé dans une zone chaude ou lorsqu'il est destiné à fonctionner longtemps sans être changé dans le cas ces anodes solubles, il convient de prévoir non seulement une surface, mais encore une masse et une forme géométrique qui permettent une corrosion ou une électro-solubilisation, sans qu'il y ait de variation significative du rapport des surfaces spécifiées ci-dessus et que ce dernier rapport reste dans les limites donnant de bons résultats pendant toute la durée de fonctionnement.

Lorsque la contre-électrode est anode, il est avantageux que l'anode soit réalisée en un métal non polarisable, tel que par exemple le platine, soit encore que l'anode soit en élément électrosoluble dans les conditions de l'expérience. Quoique les quantités mises en solution soient négligeables, l'élément électro-soluble est de préférence non nuisible au milieu. Le zinc convient parfaitement à la mesure dans des milieux d'esters phosphorés. D'une manière générale, les contre-électrodes de très grande surface par rapport à la surface de l'ultra-microélectrode et réalisées en métal électro-soluble, c'est-à-dire donnant lieu à une réaction d'oxydation anodique et dont le produit d'oxydation est soluble dans le milieu dans les conditions de l'expérience donnent de particulièrement bons résultats et particulièrement bien reproductibles.

Le présent procédé de mesure donne de particulièrement bons résultats, et est bien adapté à la mesure de l'acidité dégagée dans des esters aprotiques organiques ou minéraux (de préférence d'acides oxygènés) dont la constante diélectrique est inférieure à 30, cette acidité étant dégagée par la décomposition ou desdits esters ou de leurs solvants ou bien de leurs solutés. Lesdits esters peuvent être dilués dans une proportion variant de 1/10ème à 10 dans divers diluants très peu conducteurs, de préférence, lesdits esters représentent au moins un tiers du fluide en volume; plus spécifiquement la technique selon l'invention convient bien pour les mélanges d'esters phosphoriques tels que ceux des divers phosphates de tertiobutylphényle et de phényle comme celui vendu sous la marque FYRQUEL VPF.

L'ultra-microélectrode peut être réalisée en divers métaux ou alliages ou matériaux conducteurs, mais on utilise de préférence ceux qui tels l'or, le platine et leur famille présentent une surtension faible pour l'hydrogène ; l'inox tient une place à part et donne également d'excellents résultats.

Les esters d'acides minéraux les plus visés sont les esters oxygénés.

L'invention est particulièrement bien adaptée pour la mesure de la dégradation des esters phosphoriques répondant à la formule générale : 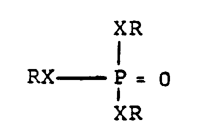
dans laquelle :
X = O ou une simple liaison,
les groupements R sont identiques ou différents et sont choisis parmi les radicaux alcoyle, aryle, aralcoyle et alcoaryle, possédant de 1 à 20 atomes de préférence de 1 à 10 de carbone. Les radicaux R peuvent posséder eux-mêmes divers groupements fonctionnels qui correspondent à des usages spécifiques desdits fluides fonctionnels.

En effet, l'acidité d'un acide phosphorique diestérifié correspond à celle de la première fonction dudit acide. Cette acidité est aisément mesurable selon la technique de la présente invention. On peut également envisager de mesurer ainsi la dégradation d'esters phosphoniques, phosphiniques, voire d'oxyde de trialcoyl phosphine, alcoyle ayant ici le sens du groupement R. L'acidité des acides carboxyliques, voire des phénols peut également être déterminée selon cette technique, ce qui est intéressant pour mesurer la dégradation de corps gras d'origine végétale ou animale.

Le procédé de mesure selon la présente invention ne doit pas être limité aux seuls usages nucléaires ou au cas où le fluide est difficile d'accès. La simplicité de la mesure, sa fiabilité, l'accessibilité du matériel nécessaire rendent le procédé accessible pour toute utilisation où les fluides du type exposé précédemment sont utilisés. Ainsi, on peut envisager une mesure du taux de dégradation des agents d'extraction phosphorés neutres dont l'oxyde de trioctylphosphine et le phosphate de tributyle sont les paradigmes.

En cas de besoin, on peut utiliser une électrode de référence, lorsque l'identification d'un phénomène ou d'une espèce parasite le nécessite. Toutefois, la mesure devra rester exceptionnelle et n'être réalisée qu'à titre transitoire.

Un autre but de la présente invention est de fournir un dispositif pour la mise en oeuvre du procédé ci-dessus. Le but est atteint par un dispositif ampérométrique pour la mesure d'espèce chimique en solution dans un milieu très peu conducteur, caractérisé par le fait qu'il comporte une ultra-microélectrode, une contre-électrode, une alimentation stabilisée en potentiel et un moyen pour mesurer l'intensité entre ladite ultra-microélectrode et ladite contre-électrode et par le fait que le rapport entre la surface de la contre-électrode et l'ultra-microélectrode est au moins égal à 10.

Un dispositif préféré à la mise en oeuvre de l'invention est un dispositif qui est constitué d'une contre-électrode dont la surface est supérieure à 10 000 fois celle de l'électrode décrite ci-après et une ultra-microélectrode dont le diamètre du disque efficace est inférieur à 100 microns et de préférence inférieur à 10 microns. Les ultra-microélectrodes mises sur le marché telles que celles vendues par la société TACUSSEL conviennent pour cette utilisation.

Ces électrodes sont reliées à un potentiostat muni d'un système de mesure ampérométrique, tel que celui commercialisé par la société P.A.R. (Princeton Applied Research) sous la dénomination PAR 174A.

Le mode de mesure choisi (par exemple impulsionnel ou sinusoïdal surimposé) ne modifie pas l'essence de l'invention et apporte ces spécificités propres au procédé selon l'invention.

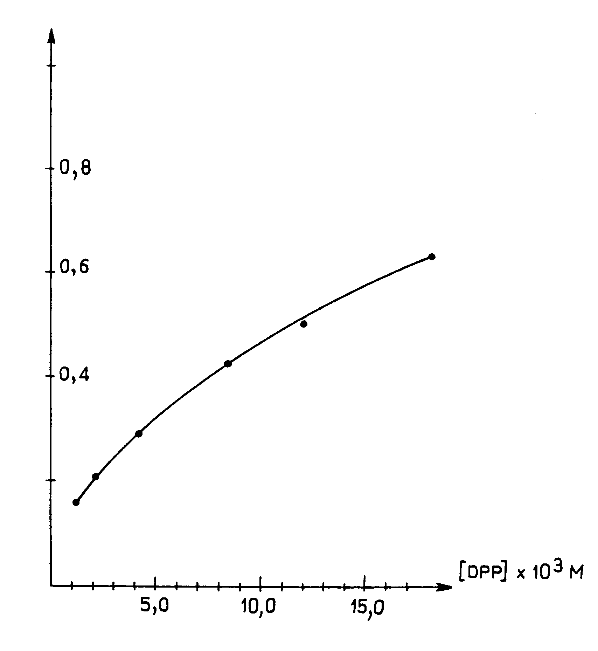

L'exemple non limitatif suivant et la figure unique illustrant l'invention permettront à l'homme de métier de mieux en apprécier l'intérêt.

### Mesure de l'acidité dans le lubrifiant FYRQUEL VPF

Matériel utilisé :
- Analyseur polarographique PAR 174A
- Table traçante X-Y BD90 KIPP ET ZONEN
- Cellule électrochimique METROHM (récipient de mesure et de titrage universel 6.570X.XXX ; couvercle 6.1414.010 ; vase avec chemise thermostatique 6.1418.150) thermostatée à 49°C et placée dans une cage de Faraday à parois pleines
- Contre-électrode de zinc Zn12 TACUSSEL
- Ultra-microélectrode de platine MEPT 10 TACUSSEL 0̸ 10 µ
- Microburette GILMONT de 0,2 ml
- Lubrifiant FYRQUEL VPF vendu par STAUFFER
- Solution d'acide diphénylphosphorique 1,01.10⁻¹M dans le FYRQUEL VPF.

Les fiches "électrode de référence" et "auxiliaire" du polarographe sont court-circuitées et reliées à l'électrode de zinc.

L'électrode de travail est reliée à l'ultra-microélectrode de platine.

Le potentiel imposé entre ultra-microélectrode et contre-électrode est de 1,00V.

Les résultats sont rassemblés sur la courbe de la figure unique qui est obtenue en mesurant le courant (I en nA) traversant les électrodes lors de l'addition (à l'aide de la microburette) de quantités croissantes d'acide diphénylphosphorique (en solution dans le FYRQUEL VPF) sur un volume initial de 10 ml de lubrifiant se trouvant dans la cellule électrochimique.

Dans ce cas, la solution était au repos lors de la mesure et elle n'était pas dégazée. Si la solution est agitée, on obtient des résultats similaires mais les valeurs des courants mesurés sont légèrement plus élevées. Le dégazage de la solution se traduit par une légère diminution des courants mesurés, de l'ordre de 10 %.

## Revendications

1. Procédé ampérométrique pour mesurer l'acidité dans un milieu très peu conducteur de l'électricité, caractérisé par le fait qu'on utilise un montage comportant une ultra-microélectrode de mesure et une contre-électrode.

2. Procédé selon la revendication 1, caractérisé par le fait que la ultra-microélectrode a sensiblement la forme d'un disque, dont le diamètre est inférieur à 50 micromètres pour des constantes diélectriques inférieures à 30.

3. Procédé selon la revendication 2, caractérisé par le fait que ledit diamètre est inférieur à 10 micromètres.

4. Procédé selon l'une des revendications 1 à 3 prises séparément, caractérisé par le fait que le rapport des surfaces entre la contre-électrode et l'ultra-microélectrode est au moins égal à 100.

5. Procédé selon les revendications 1 à 4 prises séparément, caractérisé par le fait que ladite ultra-microélectrode est en platine ou en or.

6. Procédé selon les revendications 1 à 4 prises séparément, caractérisé par le fait que ladite ultra-microélectrode est en inox.

7. Procédé selon les revendications 1 à 6 prises séparément, caractérisé par le fait que ladite contre-électrode est réalisée dans le groupe constitué par les éléments électrosolubles et leurs alliages et par les métaux de la mine du platine.

8. Procédé selon les revendications 1 à 7 prises séparément, caractérisé par le fait que ledit milieu contient au moins un ester d'acide oxygéné.

9. Procédé selon la revendication 8, caractérisé par le fait que ledit ester oxygéné est un ester d'acide phosphorique.

10. Dispositif ampérométrique pour la mesure d'espèce chimique en solution dans un milieu très peu conducteur, caractérisé par le fait qu'il comporte une ultra-microélectrode, une contre-électrode, une source de tension stabilisée et un moyen pour mesurer l'intensité entre ladite ultra-microélectrode et ladite contre-électrode et par le fait que le rapport entre la surface de la contre-électrode et l'ultra-microélectrode est au moins égal à 10.

## Patentansprüche

1. Konduktometrisches Verfahren zum Messen des Säuregrades in einem sehr schwach elektrisch leitenden Milieu dadurch gekennzeichnet, daß man eine Anordnung verwendet, die eine Ultramikromesselektrode und eine Gegenelektrode umfaßt.

2. Verfahren nach Anspruch 1 dadurch gekennzeichnet, daß die Ultramikroelektrode im wesentlichen die Form einer Scheibe hat, deren Durchmesser für Dielektrizitätskonstanten von weniger als 30 unter 50 µm liegt.

3. Verfahren nach Anspruch 2 dadurch gekennzeichnet, daß der Durchmesser unter 10 µm liegt.

4. Verfahren nach einem der Ansprüche 1 bis 3 jeweils dadurch gekennzeichnet, daß das Flächenverhältnis zwischen der Gegenelektrode und der Ultramikroelektrode wenigstens gleich 100 ist.

5. Verfahren nach den Ansprüchen 1 bis 4 jeweils dadurch gekennzeichnet, daß die Ultramikroelektrode aus Platin oder aus Gold ist.

6. Verfahren nach den Ansprüchen 1 bis 4 jeweils dadurch gekennzeichnet, daß die Ultramikroelektrode aus Inox ist.

7. Verfahren nach den Ansprüchen 1 bis 6 jeweils dadurch gekennzeichnet, daß die Gegenelektrode aus einem Material einer Gruppe verwirklicht ist, die aus den elektrolöslichen Elementen und ihren Legierungen und den Metallen des Platinerzes besteht.

8. Verfahren nach den Ansprüchen 1 bis 7 jeweils dadurch gekennzeichnet, daß das Milieu wenigstens einen Sauerstoffsäureester enthält.

9. Verfahren nach Anspruch 8 dadurch gekennzeichnet, daß der Sauerstoffester ein Phosphorsäureester ist.

10. Konduktometrische Vorrichtung zum Messen eines chemischen Stoffes in Lösung in einem sehr schwach leitenden Milieu dadurch gekennzeichnet, daß sie eine Ultramikroelektrode, eine Gegenelektrode, eine stabilisierte Spannungsquelle und Einrichtungen zum Messen der Stromstärke zwischen der Ultramikroelektrode und der Gegenelektrode umfaßt und daß das Verhältnis zwischen der Fläche der Gegenelektrode und der Fläche der Ultramikroelektrode wenigstens gleich 10 ist.

## Claims

1. Amperometric method for measuring acidity in a medium which is a very poor conductor of electricity, characterized in that an assembly comprising a measuring ultramicroelectrode and a counterelectrode is employed.

2. Method according to Claim 1, characterized in that the ultramicroelectrode is substantially in the shape of a disc whose diameter is less than 50 micrometres in the case of dielectric constants lower than 30.

3. Method according to Claim 2, characterized in that the said diameter is less than 10 micrometres.

4. Method according to one of Claims 1 to 3, taken separately, characterized in that the surface area ratio of the counterelectrode to the ultramicroelectrode is at least equal to 100.

5. Method according to Claims 1 to 4, taken separately, characterized in that the said ultramicroelectrode is made of platinum or gold.

6. Method according to Claims 1 to 4, taken separately, characterized in that the said ultramicroelectrode is made of stainless steel.

7. Method according to Claims 1 to 6, taken separately, characterized in that the said counterelectrode is made of the group consisting of electrosoluble elements and their alloys and of the metals of the platinum group.

8. Method according to Claims 1 to 7, taken separately, characterized in that the said medium contains at least one ester of an acid containing oxygen.

9. Method according to Claim 8, characterized in that the said oxygen-containing ester is an ester of phosphoric acid.

10. Amperometric device for measuring chemical species in solution in a very poorly conductive medium, characterized in that it comprises an ultramicroelectrode, a counterelectrode, a stabilized voltage source and a means for measuring the current between the said ultramicroelectrode and the said counterelectrode and in that the ratio of the surface area of the counterelectrode to the ultramicroelectrode is at least equal to 10.
